# EUROPÄISCHE PATENTSCHRIFT

(11) **EP 3 475 595 B1**
(45) Veröffentlichungstag und Bekanntmachung des Hinweises auf die Patenterteilung: **08.07.2020**
(21) Anmeldenummer: 17729764.5
(22) Anmeldetag: 10.05.2017
(51) Int. Cl.: F16F 15/14

(54) **FLIEHKRAFTPENDELEINRICHTUNG**
CENTRIFUGAL FORCE PENDULUM DEVICE
SYSTÈME PENDULE CENTRIFUGE

(30) Priorität: 22.06.2016 DE 102016211132
(43) Veröffentlichungstag der Anmeldung: 01.05.2019
(73) Patentinhaber: Schaeffler Technologies AG & Co. KG, 91074 Herzogenaurach (DE)
(72) Erfinder: NEUMAIER, Frank, 77796 Mühlenbach (DE)
(86) Internationale Anmeldenummer: PCT/DE2017/100397
(87) Internationale Veröffentlichungsnummer: WO 2017/220069

(56) Entgegenhaltungen:
- WO-A1-2015/113539
- DE-A1-102011 085 983
- DE-A1-102011 100 895
- DE-A1-102013 204 713
- DE-A1-102014 213 862

## Beschreibung

Die Erfindung betrifft eine Fliehkraftpendeleinrichtung, insbesondere für den Antriebsstrang eines Kraftfahrzeugs.

Fliehkraftpendeleinrichtungen weisen üblicherweise zumindest ein Flanschelement auf, welches antriebsseitig angeordnet ist und an welchem Pendelmassen als Fliehgewichte verlagerbar angelenkt angeordnet sind. Dabei sind durchaus Varianten bekannt, bei welchen an einem Flanschelement beiderseits des Flanschelements Pendelmassen angeordnet sind und es sind auch Fliehkraftpendeleinrichtungen bekannt, bei welchen zwei parallel angeordnete Flanschelemente vorgesehen sind, wobei die Pendelmassen zwischen den Flanschelementen angeordnet sind. Dabei ist die jeweilige Pendelmasse durch jeweils zumindest eine Führungsbahn im Flansch als auch in der Pendelmasse und mittels zumindest eines Rollenelements verlagerbar geführt, wobei das Rollenelement in die Führungsbahnen eingreift. Eine solche Fliehkraftpendeleinrichtung ist beispielsweise aus dem Dokument DE102011085983 bekannt.

Dabei sind grundsätzlich Fliehkraftpendeleinrichtungen bekannt geworden, bei welchen entweder die Pendelmassen keine Eigenrotation durchführen oder bei welchen die Pendelmassen eine Eigenrotation im Verhältnis zum Zentralwinkel durchführen, wobei das Verhältnis über den kompletten Schwingwinkelbereich nahezu konstant ist. In diesen beiden Fällen führt dies dazu, dass sich feste Punkte auf zwei benachbarten Pendelmassen während einer Schwingung entweder aufeinander zubewegen oder voneinander wegbewegen. Eine Synchronisation der Pendelmassen wird dadurch erheblich erschwert, da eine Synchronisiervorrichtung in Form beispielsweise eines Federelements dadurch bei jeder Schwingung und auch bei synchroner Bewegung der Pendelmassen beansprucht wird. Das bedeutet allerdings, dass die Kraft, die das Federelement auf die Pendelmassen ausübt, über den Verlauf einer Schwingung nicht konstant ist, sondern die Federkraft abhängig vom Schwingwinkel der Pendelmassen ist und damit veränderlich ist.

Eine Veränderung der Federkraft während einer Schwingung hat jedoch in der Regel auch eine negative Auswirkung auf die Schwingungsordnung der Schwingung. Durch eine Anpassung der Bahngeometrie der Führungsbahnen kann dieser Einfluss für einen bestimmten Betriebspunkt der Fliehkraftpendeleinrichtung zwar kompensiert werden, für alle anderen Betriebspunkte ist eine Kompensation jedoch nicht oder nur teilweise möglich. Dies führt dazu, dass das theoretisch mögliche Rückstellmoment reduziert wird und somit die Isolation von Drehschwingungen schlechter ist als theoretisch möglich und erwartet.

Aus einer älteren Patentanmeldung der Anmelderin sind weiterhin Fliehkraftpendeleinrichtungen bekannt, bei welchen durch ein gezieltes Anpassen der Eigenrotation der Pendelmasse um den eigenen Schwerpunkt im Verhältnis zur Schwingung der Pendelmasse um die Kurbelwelle entlang der Schwerpunktsbahn erreicht wird, dass feste Lagerpunkte auf zwei benachbarten Pendelmassen immer den gleichen Abstand zueinander haben. Gleichzeitig wird die Schwerpunktsbahn der Pendelmasse so angepasst, dass die Schwingordnung des Systems, trotz variabler Eigenrotation der Pendelmasse, über den Schwingwinkel konstant bleibt bzw. einem vorgegebenen Verlauf folgt, wie beispielsweise mit einer gezielten Verstimmung der Pendelordnung in den Endlagen der Pendelmassenbewegung.

Dadurch ist es möglich, dass ein Koppelelement an diesen festen Punkten zwischen zwei Pendelmassen angebracht werden kann, das bei synchroner Schwingbewegung der Pendelmassen nicht beansprucht wird. Ein wesentliches Merkmal dieser Koppelpunkte ist, dass der Abstand zur Kurbelwellenachse während einer Schwingung nicht konstant bleibt, sondern sich je nach Schwingrichtung vergrößert bzw. verkleinert. Außerdem verdreht sich das Koppelelement selbst relativ zu den Pendelmassen, was bei großen Schwingwinkeln des Pendels zu ungünstigen Hebelverhältnissen bzw. zu ungünstigen Kraftvektoren führt.

Es ist die Aufgabe der vorliegenden Erfindung, eine Fliehkraftpendeleinrichtung zu schaffen, welche eine Synchronisiervorrichtung zur Synchronisierung der Pendelmassen aufweist, die bei synchroner Bewegung der Pendelmassen zumindest im Wesentlichen nicht beansprucht wird und somit die im Wesentlichen freie Schwingbewegung der Pendelmassen nicht behindert.

Die Synchronisierung durch die Synchronisiervorrichtung soll entsprechend erst bei der Tendenz zu einer asynchronen Bewegung der Pendelmassen, beispielsweise durch Schwerkrafteffekte, wirksam werden, so dass die Pendelmassen trotz störender äußerer Einflüsse synchron schwingen.

Ein weiterer Aspekt der Erfindung ist, dass die Synchronisiervorrichtung im Wesentlichen keinen Einfluss auf die Schwingungsordnung der Pendelmassen haben soll. Außerdem soll es bei großen Schwingwinkeln zu zumindest keinen ungünstigen Hebelverhältnissen bzw. Kraftvektoren kommen, die zu einem Verklemmen der Pendelmassen bzw. zu einer Störung der Schwingung führen.

Die Aufgabe der Erfindung wird mit den Merkmalen von Anspruch 1 gelöst.

Ein Ausführungsbeispiel der Erfindung betrifft eine Fliehkraftpendeleinrichtung mit zumindest einem um eine Drehachse verdrehbaren Flanschelement, insbesondere als Trägerteil, welches antriebsseitig angeordnet ist und an welchem Pendelmassen als Fliehgewichte verlagerbar angelenkt angeordnet sind, wobei die Pendelmassen an dem zumindest einen Flanschelement über den Umfang verteilt angeordnet sind und mittels Pendellagern an dem zumindest einen Flanschelement gelagert sind, wobei die Pendelmassen gegenüber dem zumindest einen Flanschelement mittels der aus jeweils auf Führungsbahnen des zumindest einen Flanschelements und der Pendelmassen abwälzenden Rollenelementen gebildeten Pendellager im Fliehkraftfeld des Flanschelements um eine Nulllage mit einem vorgegebenen Schwingwinkel (a) pendelfähig und während einer Pendelbewegung um deren Schwerpunkt (S) teilweise verdrehbar aufgehängt sind, wobei die Pendelmassen mit einem Koppelelement miteinander gekoppelt sind und wobei die Pendel- und Rotationsbewegung der Pendelmassen durch die Ausbildung der Führungsbahnen und der Bewegung des Koppelelements vorgegeben ist, wobei das Koppelelement an der jeweiligen Pendelmasse an einem isoradialen Punkt angreift, welcher während einer Pendel- und Rotationsbewegung der Pendelmassen auf gleicher radialer Höhe verbleibt, wobei auch der jeweilige Abstand der isoradialen Punkte der jeweiligen Pendelmassen relativ zueinander konstant bleibt. Durch die Ausbildung des isoradialen Punkts der jeweiligen Pendelmasse kann bei synchroner Bewegung die Kopplung erfolgen und es findet dennoch keine gegenseitige Beeinflussung statt. Schwingen die Pendelmassen hingegen nicht synchron, so findet eine Beeinflussung der Pendelmassen durch das Koppelelement statt. Dies hat auch Geräuschvorteile, weil die einzelnen Fliehgewichte miteinander gekoppelt sind und beispielsweise bei geringen Drehzahlen die Pendelmassen nicht mehr einzeln nach radial innen durchfallen und Geräusche erzeugen können. Das Flanschelement ist dabei antriebsseitig angeordnet, damit es verdrehbar angeordnet ist und zu einer Drehung angetrieben werden kann. Grundsätzlich kann das Flanschelement beliebig im Antriebsstrang angeordnet oder mit ihm verbunden sein, beispielsweise auch mit einer Riemenscheibe oder in einem Getriebe.

Besonders vorteilhaft ist es, wenn das Koppelelement ein Ringelement ist, das radial innerhalb oder radial außerhalb der Pendelmassen oder axial versetzt auf gleicher Höhe wie die Pendelmassen angeordnet ist und verdrehbar gelagert angeordnet ist. Dadurch kann das Koppelelement bauraumsparend angeordnet sein und dennoch alle Pendelmassen miteinander koppeln.

Besonders vorteilhaft ist es auch, wenn das Koppelelement relativ zu dem zumindest einen Flanschelement verdrehbar gelagert angeordnet ist. Dadurch kann eine reibungsarme bzw. reibungsfreie Verlagerung bzw. Verdrehung des Koppelelements erfolgen, während das Koppelelement mit den Pendelmassen gekoppelt ist.

Auch ist es vorteilhaft, wenn das Koppelelement radial vorstehende Arme aufweist, mittels welchen jeweils eine der Pendelmassen an ihrem isoradialen Punkt koppelbar ist. Dadurch kann die jeweilige Pendelmasse relativ zu dem Koppelelement frei beweglich verlagerbar angeordnet sein, so dass die Bewegung der Pendelmassen durch das Koppelelement nicht unnötig beschränkt wird.

Gemäß einem weiteren erfindungsgemäßen Gedanken ist es vorteilhaft, wenn die Führungsbahnen zur Führung der Pendel- und Rotationsbewegung derart ausgebildet sind, dass die Rotationsbewegung der Pendelmasse um den eigenen Schwerpunkt im Verhältnis zur Pendelbewegung der Pendelmasse um die Kurbelwelle ergibt, dass es einen Punkt auf der Pendelmasse gibt, dessen Abstand R' zur Kurbelwellenachse während der gesamten Pendel- und Rotationsbewegung konstant bleibt. Dadurch kann die Kopplung erfolgen, die bei synchroner Bewegung der Pendelmassen wirkungslos bleibt und bei asynchroner Bewegung seine Wirkung entfaltet.

Auch ist es besonders vorteilhaft, wenn die Schwerpunktsbahn der Pendelmasse derart gewählt ist, dass die Schwingordnung der Pendelbewegung der Pendelmasse trotz veränderlicher Eigenrotation der Pendelmasse über den Schwingwinkel konstant bleibt oder einem vorgegebenen Verlauf folgt. Dies bewirkt, dass die Schwingungsordnung nicht beeinflusst wird, wenn das Koppelelement aktiv ist und eine Synchronisierung der Pendelmassen erfolgt.

Auch ist es zweckmäßig, wenn die Schwerpunktsbahn der Pendelmasse auf einer nach radial innen geöffneten gekrümmten Bahn verläuft.

Besonders vorteilhaft ist es auch, wenn je Pendelmasse nur jeweils eine oder zwei Führungsbahnen vorgesehen sind. Zusammen mit dem Koppelelement definiert/definieren diese Führungsbahn bzw. diese Führungsbahnen die Bewegung der jeweiligen Pendelmasse und deren Aufteilung in Rotations- und Pendelbewegung. Dadurch wird eine stabile und definierte Rotationsbewegung der Pendelmasse erreicht.

So ist es auch vorteilhaft, wenn die Kopplung zwischen der jeweiligen Pendelmasse und dem Koppelelement mittels Gleit- oder Wälzlagern erfolgt. Dadurch kann eine reibungsarme Kopplung erreicht werden, was die Bewegung der Pendelmassen nur möglichst wenig stört.

Die vorliegende Erfindung wird nachfolgend anhand bevorzugter Ausführungsbeispiele in Verbindung mit den zugehörigen Figuren näher erläutert:
Dabei zeigen:
- Figur 1: eine schematische Darstellung einer Fliehkraftpendeleinrichtung zur Erläuterung der Erfindung,
- Figur 2: eine schematische Darstellung einer Fliehkraftpendeleinrichtung zur Erläuterung der Erfindung, und
- Figur 3: eine schematische Darstellung einer Fliehkraftpendeleinrichtung zur Erläuterung der Erfindung.

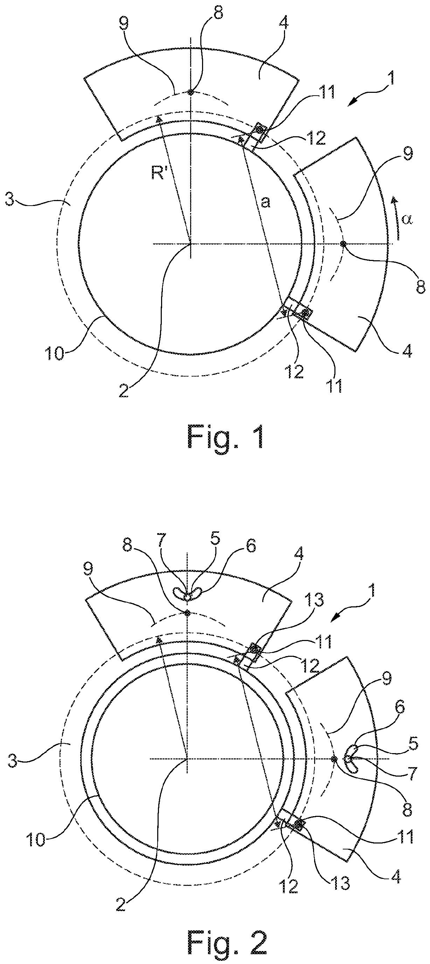

Die Figuren 1 bis 3 zeigen jeweils eine schematische Darstellung einer Fliehkraftpendeleinrichtung 1 zur Erläuterung des erfinderischen Gedankens und eines Ausführungsbeispiels einer erfindungsgemäßen Fliehkraftpendeleinrichtung 1.

Die Figuren 1 bis 3 zeigen eine Fliehkraftpendeleinrichtung 1 mit zumindest einem um eine Drehachse 2 verdrehbaren Flanschelement 3, welches antriebsseitig angeordnet ist. Das zumindest eine Flanschelement 3 kann beispielweise als ein Flanschelement 3 oder als zwei parallel angeordnete Flanschelemente 3 ausgebildet sein. Das zumindest eine Flanschelement ist antriebsseitig angeordnet, was bedeutet, dass es beispielsweise von einem Antriebsstrang antreibbar ist.

Die Fliehkraftpendeleinrichtung 1 ist mit einem Flanschelement 3 als Trägerelement ausgebildet gezeigt. Dabei sind durchaus Varianten bekannt, bei welchen an einem Flanschelement 3 beiderseits des Flanschelements 3 Pendelmassen 4 angeordnet sind und es sind auch Fliehkraftpendeleinrichtungen 1 bekannt, bei welchen zwei parallel angeordnete Flanschelemente 3 vorgesehen sind, wobei die Pendelmassen 4 zwischen den beiden Flanschelementen 3 angeordnet sind. Dabei ist die jeweilige Pendelmasse 4 durch jeweils zumindest eine Führungsbahn 6 im Flanschelement 3 als auch in der Pendelmasse 4 und mittels zumindest eines Rollenelements 7 verlagerbar geführt, wobei das Rollenelement 7 in die Führungsbahnen 6 eingreift.

An dem zumindest einen Flanschelement 3 sind Pendelmassen 4 als Fliehgewichte verlagerbar angelenkt angeordnet. Die Pendelmassen 4 sind an dem zumindest einen Flanschelement 3 über den Umfang verteilt angeordnet und sie sind mittels Pendellagern 5 an dem zumindest einen Flanschelement 3 gelagert angelenkt. Dabei sind die Pendelmassen 4 gegenüber dem zumindest einen Flanschelement 3 mittels der aus jeweils auf Führungsbahnen 6 des zumindest einen Flanschelements 3 und der Pendelmassen 4 abwälzenden Rollenelementen 7 gebildeten Pendellagern 5 im Fliehkraftfeld des Flanschelements 3 um eine Nulllage mit einem vorgegebenen Schwingwinkel (a) pendelfähig und während einer Pendelbewegung um deren Schwerpunkt (S) teilweise verdrehbar aufgehängt und damit beweglich gelagert.

Die Pendel- und Rotationsbewegung der jeweiligen Pendelmasse 4 ist durch die Ausbildung der Führungsbahnen 6 in den Pendelmassen und in dem Flanschelement 3 sowie des Koppelelements 10 vorgegeben. Dadurch kann die Pendelmasse 4 eine Pendelbewegung bzw. Schwingbewegung des Schwerpunkts 8 entlang einer Schwerpunktsbahn 9 vollziehen und eine Drehbewegung der Pendelmasse 4 um den Schwerpunkt 8 vollziehen.

Die Pendelmassen 4 sind weiterhin mit einem Koppelelement 10 miteinander gekoppelt. Dabei ist das Koppelelement 10 an der jeweiligen Pendelmasse 4 an einem isoradialen Punkt 11 angreifend ausgebildet. Der isoradiale Punkt 11 ist dabei ein Punkt, welcher während einer Pendel- und Rotationsbewegung der Pendelmassen 4 auf gleicher radialer Höhe R' verbleibt, wobei auch der jeweilige Abstand a der isoradialen Punkte der jeweiligen Pendelmassen 4 bei einer synchronen Bewegung der Pendelmassen 4 relativ zueinander konstant bleibt.

Die Figuren 1 bis 3 zeigen, dass das Koppelelement 10 ein Ringelement ist, das radial innerhalb der Pendelmassen 4 angeordnet ist und verdrehbar gelagert angeordnet ist. Alternativ dazu kann das Koppelelement 10 auch als Ringelement ausgebildet sein, welches radial außerhalb der Pendelmassen 4 angeordnet ist. Dabei ist das Koppelelement 10 relativ zu dem zumindest einen Flanschelement 3 verdrehbar gelagert angeordnet. Es kann dazu mittels Lagermitteln am Flansch abgestützt und gelagert sein. Das Koppelelement 10 kann aber auch frei verdrehbar angeordnet sein.

Das Ausführungsbeispiel der Figuren 1 bis 3 zeigt, dass das Koppelelement 10 radial vorstehende Arme 12 aufweist, mittels welchen jeweils eine der Pendelmassen 4 an ihrem isoradialen Punkt 11 koppelbar sind.

Für die Kopplung zwischen der jeweiligen Pendelmasse 4 und dem Koppelelement 10 bzw. dem Arm 12 sind vorzugsweise Gleit- oder Wälzlager 13 vorgesehen, was eine reibungsarme Verbindung bewirkt.

Für die Ausbildung der Pendelmassen und deren Kopplung sowie deren Bewegungsdefinition ist es besonders vorteilhaft, wenn die Führungsbahnen 6 zur Führung der Pendel- und Rotationsbewegung der Pendelmassen 4 derart ausgebildet sind, dass die Rotationsbewegung der Pendelmasse 4 um den eigenen Schwerpunkt 8 im Verhältnis zur Pendelbewegung der Pendelmasse 4 um die Kurbelwelle bzw. deren Drehachse 2 ergibt, dass es einen Punkt auf der Pendelmasse 4 gibt, dessen Abstand R' zur Kurbelwellenachse 2 während der gesamten Pendel- und Rotationsbewegung konstant bleibt. Dies ist der isoradiale Punkt 11.

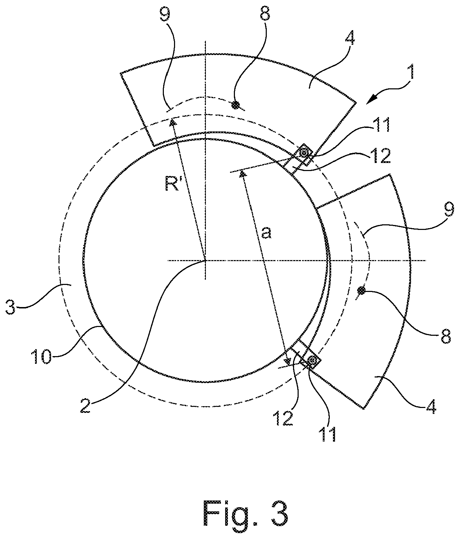

Auch ist es vorteilhaft, wenn die Schwerpunktsbahn 9 der Pendelmasse 4 derart gewählt ist, dass die Schwingordnung der Pendelbewegung der Pendelmasse 4 trotz veränderlicher Eigenrotation der Pendelmasse 4 über den Schwingwinkel konstant bleibt oder einem vorgegebenen Verlauf folgt. So ist es vorteilhaft, wenn die Schwerpunktsbahn 9 der Pendelmasse 4 auf einer nach radial innen geöffneten gekrümmten Bahn verläuft. Dabei zeigt die Figur 1, dass der Schwerpunkt in der Mitte der Schwerpunktsbahn ist und die Pendelmasse in einer mittigen Stellung ist. In Figur 3 ist eine ausgelenkte Position gezeigt, bei welcher die Pendelmasse 4 derart ausgelenkt ist, dass der Schwerpunkt 8 auf der Schwerpunktsbahn 9 nach rechts verschoben ist. Dabei kippt die Pendelmasse 4 mit ihrem linken Rand nach radial innen und der isoradiale Punkt 11 bleibt in seiner radialen Lage unverändert.

Die Figur 2 zeigt, dass je Pendelmasse 4 nur jeweils eine der Führungsbahnen 6 vorgesehen ist. Es kann alternativ aber auch sein, dass zwei Führungsbahnen 6 je Pendelmasse 4 vorgesehen sind.

Durch eine gezielte Anpassung der Drehbewegung der Pendelmasse 4 um den eigenen Schwerpunkt 8 im Verhältnis zur Schwingung der Pendelmasse um die Kurbelwelle bzw. um die Drehachse 2 wird erreicht, dass es einen Punkt auf der Pendelmasse 4 gibt, dessen Abstand R' zur Kurbelwellenachse 2 während der kompletten Schwingbewegung konstant bleibt, der isoradiale Punkt 11. Gleichzeitig wird die Schwerpunktsbahn 9 der Pendelmasse 4 so angepasst, dass die Schwingordnung des Systems, trotz veränderlicher Eigenrotation der Pendelmasse 4, über den Schwingwinkel konstant bleibt bzw. einem vorgegebenen Verlauf folgt. Dadurch ist auch der Abstand a zum isoradialen Punkt 11 der benachbarten Pendelmasse 4 während der kompletten Schwingbewegung konstant, sofern beide Pendelmassen die gleiche Schwingung ausführen bzw. die gleiche Schwerpunktsbahn 9 aufweisen. Dadurch ist es möglich, die einzelnen Pendelmassen 4 mittels eines Koppelelements 10, wie beispielswiese eines Synchronrings, zu koppeln und eine Synchronisierung der Schwingbewegung der Pendelmassen 4 zu erreichen, ohne dass dadurch eine Beeinflussung der Schwingordnung erfolgt. Erst wenn die Pendelmassen 4 beginnen asynchron zu schwingen, würde sich der Abstand a zwischen den isoradialen Punkten 11 verändern, was jedoch durch das Koppelelement verhindert wird. Das Koppelelement ist dabei bevorzugt ein starres Ringelement.

Der Vorteil in der erfindungsgemäßen Ausbildung ist, dass die Pendelmassen 4 synchron schwingen können und dabei eine gegenseitige Beeinflussung der Pendelmassen 4 bzw. eine gegenseitige Behinderung während des Schwingens im Wesentlichen nicht mehr stattfinden kann. Somit ist es möglich auch bei niedrigen Ordnungen bzw. bei störenden Einflüssen von außen den Bauraum optimal auszunutzen und ein höheres Rückstellmoment zu erreichen, als dies ohne Synchronisation möglich wäre.

Ein weiterer Vorteil der erfindungsgemäßen Ausgestaltung ist, dass die Geräuschproblematik bei einem Start/Stopp des Motors bzw. bei einem Herunterfallen der Pendelmassen aufgrund geringer Fliehkräfte in diesem Betriebspunkt reduziert ist. Durch die Kopplung mittels des Koppelelements 10 ist es nicht mehr möglich, dass einzelne Pendelmassen aufgrund der Schwerkraft herunterfallen bzw. gegeneinander schlagen und somit störende Geräusche verursachen.

Für die Anbindung der Pendelmasse 4 an das Koppelelement 10 kann neben der Verwendung von Wälz- oder Gleitlagern auch eine andere Form eines Gelenks, wie beispielsweise eine Blattfeder, vorgesehen sein.

Die Lage des Koppelpunktes als isoradialer Punkt 11 kann frei gewählt werden. Bevorzugt ist jedoch ein Bereich am Rand der Pendelmasse 4, besonders bevorzugt an einem Randbereich mit möglichst großem Abstand zum Schwerpunkt 8 der Pendelmasse 4 und mit möglichst geringem Abstand zur Drehachse 2.

Für den Verlauf von β', also dem Verhältnis von Änderung des Eigenrotationswinkels der Pendelmasse zu der Änderung des Schwingwinkels der Pendelmasse bezüglich der Drehachse 2, wird ein Verhältnis zwischen 0,5 bis 1,5 angestrebt. Das Verhältnis kann aber auch größer oder kleiner als der angegebene Bereich von 0,5 bis 1,5 sein, also kleiner als 0,5 oder größer als 1,5. Dabei ist zu erwähnen, dass das Winkelverhältnis bei Auslenkung der Pendelmasse, ausgehend von der in Figur 1 gezeigten Mittellage, auch Vertexlage genannt, in positive Richtung größer 1, bei Auslenkung in negative Richtung kleiner 1 ist, oder umgekehrt.

Das Koppelelement 10, wie der Synchronring, ist bevorzugt radial innen, insbesondere zwischen den Pendelmassen 4 und der Drehsachse 2 angebracht. Möglich ist auch eine Anordnung radial außen oder axial versetzt auf Höhe der Pendelmassen 4 denkbar.

Das Koppelelement ist vorzugsweise mittels eines Gleitlagers oder eines Wälzlagers auf der Drehachse 2, wie einer Kurbelwelle, oder am Flanschelement 3 gelagert. Alternative Arten einer Lagerung oder auch Varianten ohne spezielle Lagerung des Koppelelements sind denkbar.

Diese erläuterte Form der Synchronisierung bzw. Kopplung von Pendelmassen 4 eignet sich für alle Anwendungen, bei welchen zwei oder mehrere Pendelmassen 4 miteinander gekoppelt sind. Besonders vorteilhaft ist dies bei Anwendungen, bei welchen die Schwingordnung kleiner oder gleich der 2. Ordnung ist.

Gemäß dem erfindungsgemäßen Gedanken ist es besonders vorteilhaft, wenn der Schwerpunkt der Pendelmasse radial über dem Kontaktpunkt der Rolle im Flansch liegt. Die Figur 2 zeigt ebenso vorteilhaft, dass der Schwerpunkt der Pendelmasse radial innerhalb des Kontaktpunkts der Rolle im Flansch liegt.

### Bezugszeichenliste

- 1: Fliehkraftpendeleinrichtung
- 2: Drehachse
- 3: Flanschelement
- 4: Pendelmasse
- 5: Pendellager
- 6: Führungsbahn
- 7: Rollenelement
- 8: Schwerpunkt
- 9: Schwerpunktsbahn
- 10: Koppelelement
- 11: isoradialer Punkt
- 12: Arm
- 13: Lager, Gleit- oder Wälzlager

## Patentansprüche

1. Fliehkraftpendeleinrichtung (1) mit zumindest einem um eine Drehachse (2) verdrehbaren Flanschelement (3), welches antriebsseitig angeordnet ist und an welchem Pendelmassen (4) als Fliehgewichte verlagerbar angelenkt angeordnet sind, wobei die Pendelmassen (4) an dem zumindest einen Flanschelement (3) über den Umfang verteilt angeordnet sind und mittels Pendellagern (5) an dem zumindest einen Flanschelement (3) gelagert sind, wobei die Pendelmassen (4) gegenüber dem zumindest einen Flanschelement (3) mittels der aus jeweils auf Führungsbahnen (6) des zumindest einen Flanschelements (3) und der Pendelmassen (4) abwälzenden Rollenelementen (7) gebildeten Pendellager (5) im Fliehkraftfeld des Flanschelements (3) um eine Nulllage mit einem vorgegebenen Schwingwinkel (a) pendelfähig und während einer Pendelbewegung um deren Schwerpunkt (S) teilweise verdrehbar aufgehängt sind und wobei die Pendel- und Rotationsbewegung der Pendelmassen (4) durch die Ausbildung der Führungsbahnen (6) und des Koppelelements (10) vorgegeben ist, **dadurch gekennzeichnet, dass** die Pendelmassen (4) mit einem Koppelelement (10) miteinander gekoppelt sind, wobei das Koppelelement (10) an der jeweiligen Pendelmasse (4) an einem isoradialen Punkt (11) angreift, welcher während einer Pendel- und Rotationsbewegung der Pendelmassen (4) auf gleicher radialer Höhe verbleibt, wobei auch der jeweilige Abstand der isoradialen Punkte (11) der jeweiligen Pendelmassen (4) relativ zueinander konstant bleibt.

2. Fliehkraftpendeleinrichtung (1) nach Anspruch 1, **dadurch gekennzeichnet, dass** das Koppelelement (10) ein Ringelement ist, das radial innerhalb oder radial außerhalb der Pendelmassen (4) oder axial versetzt auf gleicher Höhe wie die Pendelmassen angeordnet ist und verdrehbar gelagert angeordnet ist.

3. Fliehkraftpendeleinrichtung (1) nach Anspruch 2, **dadurch gekennzeichnet, dass** das Koppelelement (10) relativ zu dem zumindest einen Flanschelement (3) verdrehbar gelagert angeordnet ist.

4. Fliehkraftpendeleinrichtung (1) nach Anspruch 2 oder 3, **dadurch gekennzeichnet, dass** das Koppelelement (10) radial vorstehende Arme (12) aufweist, mittels welchen jeweils eine der Pendelmassen (4) an ihrem isoradialen Punkt (11) koppelbar sind.

5. Fliehkraftpendeleinrichtung (1) nach einem der vorhergehenden Ansprüche, **dadurch gekennzeichnet, dass** die Führungsbahnen (6) zur Führung der Pendel- und Rotationsbewegung derart ausgebildet sind, dass die Rotationsbewegung der Pendelmasse (4) um den eigenen Schwerpunkt (8) im Verhältnis zur Pendelbewegung der Pendelmasse (4) um die Kurbelwelle ergibt, dass es einen Punkt auf der Pendelmasse (4) gibt, dessen Abstand R' zur Kurbelwellenachse während der gesamten Pendel- und Rotationsbewegung konstant bleibt.

6. Fliehkraftpendeleinrichtung (1) nach einem der vorhergehenden Ansprüche, **dadurch gekennzeichnet, dass** die Schwerpunktsbahn (9) der Pendelmasse (4) derart gewählt ist, dass die Schwingordnung der Pendelbewegung der Pendelmasse (4) trotz veränderlicher Eigenrotation der Pendelmasse (4) über den Schwingwinkel konstant bleibt oder einem vorgegebenen Verlauf folgt.

7. Fliehkraftpendeleinrichtung (1) nach einem der vorhergehenden Ansprüche, **dadurch gekennzeichnet, dass** die Schwerpunktsbahn (9) der Pendelmasse (4) auf einer nach radial innen geöffneten gekrümmten Bahn verläuft.

8. Fliehkraftpendeleinrichtung (1) nach einem der vorhergehenden Ansprüche, **dadurch gekennzeichnet, dass** je Pendelmasse (4) nur jeweils eine oder zwei Führungsbahnen (6) vorgesehen sind.

9. Fliehkraftpendeleinrichtung (1) nach einem der vorhergehenden Ansprüche, **dadurch gekennzeichnet, dass** die Kopplung zwischen der jeweiligen Pendelmasse (4) und dem Koppelelement (10) mittels Gleit- oder Wälzlagern (13) erfolgt.

## Claims

1. A centrifugal force pendulum device (1) having at least one flange element (3) which can be rotated about an axis of rotation (2), which is arranged on the drive side and on which pendulum masses (4) are arranged as centrifugal weights in an articulated manner so as to be displaceable, wherein the pendulum masses (4) on the at least one flange element (3) are distributed over the circumference thereof and are mounted on the at least one flange element (3) by means of pendulum bearings (5), wherein the pendulum masses (4) can oscillate relative to the at least one flange element (3) in the centrifugal force field of the flange element (3) about a zero position with a predetermined oscillation angle (α) by means of the pendulum bearings (5) which are formed from roller elements (7) rolling on guideways (6) of the at least one flange element (3) and the pendulum masses (4), and are suspended in a partially rotatable manner during a pendulum movement about the centre of gravity (S) thereof and wherein the pendulum and rotational movement of the pendulum masses (4) is predefined by the design of the guideways (6) and the coupling element (10), **characterised in that** the pendulum masses (4) are coupled to one another by means of a coupling element (10), wherein the coupling element (10) acts on the respective pendulum mass (4) at an isoradial point (11), which remains at the same radial height during a pendulum and rotational movement of the pendulum masses (4), wherein the respective distances between the isoradial points (11) of the respective pendulum masses (4) also remain constant relative to one another.

2. The centrifugal force pendulum device (1) according to claim 1, **characterised in that** the coupling element (10) is a ring element which is arranged radially within or radially outside the pendulum masses (4) or axially offset at the same height as the pendulum masses and is mounted such that it can rotate.

3. The centrifugal force pendulum device (1) according to claim 2, **characterised in that** the coupling element (10) is mounted such that it can rotate relative to the at least one flange element (3).

4. The centrifugal force pendulum device (1) according to claim 2 or 3, **characterised in that** the coupling element (10) has radially projecting arms (12), by means of which one of the pendulum masses (4) can be coupled at its isoradial point (11).

5. The centrifugal force pendulum device (1) according to any one of the preceding claims, **characterised in that** the guideways (6) for guiding the pendulum and rotational movement are designed such that the rotational movement of the pendulum mass (4) around its own centre of gravity (8) in relation to the pendulum movement of the pendulum mass (4) around the crankshaft shows that there is a point on the pendulum mass (4), at which the distance R' to the crankshaft axis remains constant for the entire pendulum and rotational movement.

6. The centrifugal force pendulum device (1) according to any one of the preceding claims, **characterised in that** the path of the centre of gravity (9) of the pendulum mass (4) is selected such that the oscillation order of the pendulum movement of the pendulum mass (4) remains constant over the oscillation angle despite the variable self-rotation of the pendulum mass (4) or follows a predetermined course.

7. The centrifugal force pendulum device (1) according to any one of the preceding claims, **characterised in that** the path of the centre of gravity (9) of the pendulum mass (4) extends on a radially inwardly open curved path.

8. The centrifugal force pendulum device (1) according to any one of the preceding claims, **characterised in that** only one or two guideways (6) are provided for each pendulum mass (4).

9. The centrifugal force pendulum device (1) according to any one of the preceding claims, **characterised in that** the coupling between the respective pendulum mass (4) and the coupling element (10) is effected by means of sliding or roller bearings (13).

## Revendications

1. Système pendule centrifuge (1) avec au moins un élément flasque (3) pouvant tourner autour d'un axe de rotation (2), lequel élément flasque est disposé du côté entraînement et sur lequel des masses pendulaires (4) sont disposées de manière articulée de manière déplaçable en tant que masselottes centrifuges, les masses pendulaires (4) étant disposées de manière répartie sur la périphérie sur ledit au moins un élément flasque (3) et étant montées sur ledit au moins un élément flasque (3) au moyen de paliers de pendule (5), les masses pendulaires (4) étant, par rapport audit au moins un élément flasque (3), suspendues de manière partiellement rotative autour d'une position neutre suivant un angle d'oscillation (α) prédéfini de manière pendulaire et pendant un déplacement pendulaire autour de leur centre de gravité (S) dans le champ de force centrifuge de l'élément flasque (3) au moyen des paliers de pendule (5) formés à partir d'éléments de roulement (7) roulant respectivement sur des chemins de guidage (6) dudit au moins un élément flasque (3) et des masses pendulaires (4), et le mouvement pendulaire et rotatif des masses pendulaires (4) étant prédéfini par la formation des chemins de guidage (6) et de l'élément d'accouplement (10), **caractérisé en ce que** les masses pendulaires (4) sont accouplées les unes aux autres à l'aide d'un élément d'accouplement (10), l'élément d'accouplement (10) agissant sur la masse pendulaire (4) respective en un point isoradial (11), qui reste à la même hauteur radiale pendant un mouvement pendulaire et rotatif des masses pendulaires (4), l'écartement respectif des points isoradiaux (11) des masses pendulaires (4) respectives les uns par rapport aux autres restant également constant.

2. Système pendule centrifuge (1) selon la revendication 1, **caractérisé en ce que** l'élément d'accouplement (10) est un élément annulaire qui est disposé radialement à l'intérieur ou radialement à l'extérieur des masses pendulaires (4) ou décalé axialement à la même hauteur que les masses pendulaires et est monté rotatif.

3. Système pendule centrifuge (1) selon la revendication 2, **caractérisé en ce que** l'élément d'accouplement (10) est monté rotatif par rapport à l'au moins un élément flasque (3).

4. Système pendule centrifuge (1) selon la revendication 2 ou 3, **caractérisé en ce que** l'élément d'accouplement (10) présente des bras (12) radialement saillants au moyen desquels respectivement l'une des masses pendulaires (4) peut être accouplée en son point isoradial (11).

5. Système pendule centrifuge (1) selon l'une quelconque des revendications précédentes, **caractérisé en ce que** les chemins de guidage (6) pour guider le mouvement pendulaire et rotatif sont conçus de telle sorte que le mouvement de rotation de la masse pendulaire (4) s'effectue autour de son propre centre de gravité (8) par rapport au mouvement pendulaire de la masse pendulaire (4) autour du vilebrequin, **en ce qu'**il existe un point sur la masse pendulaire (4) dont l'écartement R' par rapport à l'axe du vilebrequin reste constant pendant tout le mouvement pendulaire et rotatif.

6. Système pendule centrifuge (1) selon l'une quelconque des revendications précédentes, **caractérisé en ce que** le chemin du centre de gravité (9) de la masse pendulaire (4) est choisi de telle sorte que l'ordre d'oscillation du mouvement pendulaire de la masse pendulaire (4) reste constant ou suive un tracé prédéfini sur l'angle d'oscillation malgré l'auto-rotation variable de la masse pendulaire (4).

7. Système pendule centrifuge (1) selon l'une quelconque des revendications précédentes, **caractérisé en ce que** le chemin du centre de gravité (9) de la masse pendulaire (4) s'étend sur un chemin courbe ouvert radialement vers l'intérieur.

8. Système pendule centrifuge (1) selon l'une quelconque des revendications précédentes, **caractérisé en ce que** pour chaque masse pendulaire (4) ne sont prévus respectivement qu'un ou deux chemins de guidage (6).

9. Système pendule centrifuge (1) selon l'une quelconque des revendications précédentes, **caractérisé en ce que** l'accouplement entre la masse pendulaire (4) respective et l'élément d'accouplement (10) s'effectue au moyen de roulements à billes ou à rouleaux (13).
